(19)

Europäisches
Patentamt

European
Patent Office

Office européen
des brevets

(11) EP 2 000 925 A1

(12) EUROPEAN PATENT APPLICATION

(43) Date of publication:
10.12.2008 Bulletin 2008/50

(51) Int Cl.:
*G06F 17/30* (2006.01)

(21) Application number: 07011296.6

(22) Date of filing: 08.06.2007

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS** | (72) Inventors:<br>• **Bauckhage, Christian Dr.**<br>  **10707 Berlin (DE)**<br>• **Aplcan, Tansu Dr.**<br>  **10625 Berlin (DE)**<br>• **Agarwal, Sachin Dr.**<br>  **10409 Berlin (DE)** |
| (71) Applicants:<br>• **Deutsche Telekom AG**<br>  **53113 Bonn (DE)**<br>• **Technische Universität Berlin**<br>  **10623 Berlin (DE)** | (74) Representative: **Kampfenkel, Klaus**<br>**Blumbach - Zinngrebe**<br>**Patentanwälte**<br>**Alexandrastrasse 5**<br>**65187 Wiesbaden (DE)** |

(54) **An intelligent graph-based expert searching system**

(57)     A query-answering system (100) and an ontology-based method for automatically peering knowledge seekers with knowledgeable experts (103) has been proposed. It comprises an intelligent, real-time expert searching engine (116) for web clients (101, 102, 103) that can effortlessly be deployed in enterprise Intranets or general interest online communities. A graph-based representation scheme has been proposed that comprises an ontology tree (10) wherein each node (20 to 70n) corresponds to a topic or subtcpic and is associated with a bag of words. This allows to represent the fields of expertise of the participating experts as well as incoming queries as subtrees of the ontology tree (10). Subsequently, we have addressed the resulting graph matching problem of assigning queries to relevant experts on a vector space, which follows from a serialization of the ontology tree, using simple dot products of respective vectors.

Fig. 1

**Description**

<u>Field of the Invention</u>

The present invention relates generally to an intelligent knowledge retrieval system using a graph-based expert searching system for information exchange in a knowledge community. In particular, the present invention is related to a method for automatically searching an information source in a graph-based query-answering communication system as well as such a query-answering communication system.

<u>Background of the Invention</u>

With the coming of age of Internet services conveniently labeled *Web 2.0* technologies, there is a rapidly growing number of interactive portals that empower individual users or whole communities to provide content and thus allow for the exchange of information at a scale previously unheard of. However, this further adds to the familiar problem of finding the right information from an abundance of data. Therefore, Web 2.0 compliant and user friendly technologies are called for that enable the efficient retrieval of relevant information.

The task of expert finding or automatic expert search has gained increased attention among researchers in information retrieval. As a consequence, most of the few known systems for expert finding rely on techniques originally developed for text retrieval.

US Patent 6,026,148 explains the idea of using a networked computer system such as the Internet to connect users to experts using non-real time interaction methods like bulletin boards or usernet email groups. US Patent 6,223,165 discloses a method for connecting users to experts in real time by matching user queries to a pool of experts via a keyword search. A method for providing information about expert availability in a graphical applet format has been described in US Patent 6,829,585. US Patent 6,938,068 describes a web based expert database that can be queried to find relevant experts in any subject.

C. Macdonal et al. proposes in the paper "Voting for Candidates: Adapting Data Fusion Techniques for an Expert Search Task" In Proc. 15th ACM Conf. on Information and Knowledge, Management, pages 387-396, 2006 an approach where each expert stored in a database is characterized by a set of documents. Given a user query, their system first retrieves a list of documents. If a retrieved document is linked with an expert, it counts as a vote for that expert. The ordered list of experts finally returned to the user reflects the number of votes received for each expert. Usually, document retrieval, as it is applied in this paper relies on the vector *space* model of documents. It represents documents and queries by term-by-document vectors and thus allows for approaches based on statistical learning.

In the paper "Determining Expert Profiles (With an Application to Expert Finding)", in Proc. 20th Int. Joint Conf. on Artificial Intelligence, pages 2657-2662, 2007, K. Balog et al. follow this paradigm, too, and consider the task of automatic expert profiling. These profiles allow for re-ranking and improving lists of experts resulting from probabilistic Bayesian reasoning.

In the paper "Finding Experts in Community-Based Question-Answering Services.", in Proc. 14th ACM Int. Conf. on Informatuion and Knowledge Management, pages 315-316, 2005, X. Liu et al. also assume experts to be represented by means of term frequency profiles. For expert finding, they consider the use of different statistical language models often applied in document retrieval and conclude that the performance depends on the information in the profile rather than on the statistical modeling technique.

Despite their dominant role, the known methods relying on term-by-document vectors suffer from several drawbacks. For instance, they cannot capture relations among terms in a single document and have to assume a static dictionary in order to fix the dimension of the vectors.

Graph-based systems, in contrast, easily cope with these shortcomings, providing a promising alternative approach to document retrieval.

For example, in the paper ,,An Ontology-Based Method for Project and Domain Expert Matching.", in Proc. Int. Conf. on Fuzzy Systems and Knowledge Discovery, volume 4223 of LNAI, pages 176-185, Springer, 2005. J. Wu et al. describe an ontology-based method for expert finding. Their approach applies ontologies in computing path-length-based distances between concepts. Upon these distances they base several definitions of document similarity.

<u>Summary of the Invention</u>

It is an object of the present invention to provide a method and a question-answering system which search information sources like experts in a more accurate, fast and scalable manner.

It is a core aspect of the present invention to develop a novel graph-based expert searching system for information exchange in the knowledge society. The method and system realize an intelligent, real-time expert search engine for enterprise Intranets or online communities that automatically relays user queries to knowledgable specialists.

The technical problem mentioned above is solved by a method for automatically searching an information source *(database, document or expert)* in a graph-based query-answering communication system which a plurality of information sources is assigned to. It should be understood that the term ,,information source" covers for example a database storing at least one document as a specific field of knowledge, a document itself or an expert.

The method comprises the steps of:

a) generating and storing for each information source a set of items;
b) defining a treelike hierarchical knowledge arrangement having an upper level and at least one lower level, wherein a plurality of general knowledge fields is arranged at the upper level and wherein each general knowledge field is assigned to at least one subknowledge field which is arranged at the lower level;
c) generating and storing for each general knowledge field and each subknowledge field a set of items;
d) assigning each information source to at least one of the general knowledge fields and at least one of the subknowledge fields by performing a similarity measure algorithm on the basis of the stored sets of items of each information source, each general knowledge field and each subknowledge field;
e) entering a query by a user;
f) deriving from the user query a set of items;
g) assigning the query to at least one of the general knowledge fields and at least one of the subknowledge fields by performing the similarity measure algorithm on the basis of the stored sets of items of the user query, each general knowledge field and each subknowledge field;
h) comparing, for each information source, the at least one general knowledge field and the at least one subknowledge field assigned to the user query with the at least one general knowledge field and the at least one subknowledge field assigned to the respective information source and calculating a matching score for each information source; and
i) assigning to the user query at least one information source in dependence of its matching score.having a matching score equal or higher than a threshold.

It should be noted, that in a preferred embodiment each item represents a word.

Since the information sources and the user query are assigned to knowledge fields or subknowledge fields instead of single items of the respective knowledge or subknowledge field the operation time to find the proper information source can be substantially reduced and the quality of finding a proper information source is increased.

In a preferred embodiment the information sources are human experts and step a) comprises the step of deriving a set of items by processing at least one document which is associated with the respective expert to define its respective expertise. Such documents might be webpages, emails, blogs etc.

In order to automatically establish a real-time life communication a request to answer the user query is transmitted to the at least one selected expert by e. g. instant messaging after executing step i). Once the request has been agreed to the user is connected to the expert who has agreed to the request.

In order to reduce computing time and storage capacity for finding an expert with respect to a user the ontology tree is serialized by using a linear ontology vector space.

In this case the treelike hierarchical arrangement can be represented by an n-dimensional linear vector, wherein n equals the number of general knowledge fields and subknowledge fields and wherein each element of the vector is set to one or zero by executing step d) which comprises the following steps:

d1) computing the similarity between the set of items of a first information source of the plurality of information sources and the set of items of each general knowledge fields;
d2) determining at least one general knowledge field having at least a predetermined similarity value;
d3) setting the respective vector element which belongs to the determined general knowledge field to one;
d4) selecting all subknowledge fields which are directly associated with the determined general knowledge field;
d5) computing the similarity value between the set of items of a first information source of the plurality of information sources and the set of items of each subknowledge fields;
d6) determining at least one subknowledge field having a similarity value equal or higher than a threshold;
d7) setting the respective vector element which belongs to the determined subknowledge field to one;
d8) selecting, if available, all subknowledge fields arranged at the next lower level of the hierarchical arrangement which are associated with the determined subknowledge field;
d9) repeating steps d5) to d8) until the subknowledge fields at the lowest level have been processed;
d10) repeating steps d1) to d9) for each information source.

Only the n-dimensional linear vector of each information source is stored then. These steps may be executed during the initialization and configuration phase of the system.

To find at least one expert with respect to a query step g) comprises the steps of d1) to d9) by replacing the set of items of the first information source by the set of items of the user query and wherein step i) comprises the step of computing the dot product of the n-dimensional vector mapped to the user query and each stored n-dimensional vector mapped to the respective information source.

To determine an optimal number of subknowledge fields the threshold at step d6) is defined by the term of $\mu + \alpha\sigma$, wherein $\mu$ is the mean value, a is the standard deviation of the similarity values computed at step d5) and $\alpha$ is a fixed parameter greater or equal zero.

In a preferred embodiment the similarity between two sets of items is computed using a similarity measure which is, for example based on the term-frequency inverse document-frequency TF-IDF) weight or the on the definition

$$r(i,j) := \frac{|B(i) \cap B(j)|}{\sqrt{|B(i)|}\sqrt{|B(j)|}},$$

wherein $B(i):= \{w_1...w_i\}$ and $B(j):=\{w_1...w_j\}$ and

wherein B(i) represents the set of items of an information source or the set of items of a user query and B(j) represents the set of items of a general knowledge field or a subknowledge field.

To enhance the robustness and reliability of the method the set of words are optimized. Therefore each general knowledge field and the subknowledge field associated therewith define a branch within the hierarchical arrangement. The set of items of a general knowledge field contains the set of items of all subknowledge fields associated therewith and wherein the set of items of each subknowledge field of a lower level contains the set of items of all subknowledge fields of the next lower level which are assigned to the respective subknowledge field. The sets of items of subknowledge fields of the same level associated with the same branch and the sets of items of the general knowledge fields do not comprise overlapping items.

To optimize, e. g. speed up and increase the quality of, the process for mapping the plurality of experts to the respective fields of knowledge or subknowledge all sets of items of the general knowledge fields and the subknowledge fields are stored in a root node of the hierarchical arrangement.

To allow dynamical re-assigning of the experts to the fields of knowledge or subknowledge their changing expertise has to be kept in view. Therefore, the set of items of each information source is updated from time to time. For example, each time the set of items of a respective information source has been updated steps d1) to d9) are executed. This method automatically and dynamically categorizes experts into their fields of expertise, making the search function much more accurate, fast, and scalable. Moreover, experts' participation information is used for re-categorizing them into related fields in real time so that the accuracy of the ontology tree is always kept up with time.

The technical problem mentioned above is also solved by question-answering communication system for automatically searching an information source. The system comprises

- an information source searching apparatus;
- a plurality of client devices which are adapted to be connected to each other and/or to the information source searching apparatus via communication means, wherein at least one of the client devices is associated with an information source, at least some of the client devices being adapted to transmit a user query to the information source searching apparatus. The searching apparatus comprises first storage means for storing for each information source a set of items, second storage means for storing a treelike hierarchical knowledge arrangement having an upper level and at least one lower level, wherein a plurality of predetermined general knowledge fields is arranged at the upper level and wherein each general knowledge field is assigned to at least one first subknowledge field which is arranged at the lower level. Furthermore, third storing means are provided for storing for each general knowledge field and each subknowledge field a set of items. A matching means serves to assign each information source to at least one of the general knowledge fields and at least one of the subknowledge fields by performing a similarity measure algorithm on the basis of the stored sets of items of each source, each general knowledge field and each subknowledge field. Deriving means operates to derive a set of items from a query entered by a user. The matching means is adapted to assign the query to at least one of the general knowledge fields and at least one of the subknowledge fields by performing the similarity measure algorithm on the basis of the stored sets of items of the user query, each general knowledge field and each subknowledge field. Comparing means serve to compare, for each information source, the at least one general knowledge field and the at least one subknowledge field assigned to the user query with the at least one general knowledge field and the at least one subknowledge field assigned to the respective information source. Calculating means are provided for calculating a matching score for each information source, wherein assigning means is adapted to assign to the user query at least one information source in dependence of the matching score.

In a preferred embodiment the communication means comprises an IP-based network, in particular an Intranet or the Internet, wherein the searching apparatus comprises at least one Web server adapted to communicate with the client devices.

In a preferred embodiment the information sources are experts which are assigned to respective client devices. In this case the search apparatus may comprise means for deriving a set of items by processing at least one document which is associated with the respective expert to define its respective expertise.

The searching apparatus is adapted to transmit a request to answer the user query to the client device of the at least one selected expert and to connect the user who has entered the query to the expert who has agreed to the request, thereby forming a real-time life chat over the communication means.

In a preferred embodiment the matching means is adapted to:

d1) compute the similarity between the set of items of a first information source of the plurality of information sources and the set of items of each general knowledge fields;

d2) determine at least one general knowledge field having at least a predetermined similarity value;

d3) set the respective vector element which belongs to the determined general knowledge field to one;

d4) select all subknowledge fields which are directly associated with the determined general knowledge field;

d5) compute the similarity value between the set of items of a first information source of the plurality of information sources and the set of items of each subknowledge fields;

d6) determine at least one subknowledge field having a similarity value equal or higher than a threshold;

d7) set the respective vector element which belongs to the determined subknowledge field to one;

d8) select, if available, all subknowledge fields arranged at the next lower level of the hierarchical arrangement which are associated with the determined subknowledge field;

d9) repeat steps d5) to d8) until the subknowledge fields at the lowest level have been processed;

d10) repeat steps d1) to d9) for each information source.

Fourth storing means are provided for storing the n-dimensional vector of each information source. It should be understood, the first to fourth storage means may form a common database.

The matching means is further adapted to execute the steps of d1) to d9) by replacing the set of items of the first information source by the set of items of the user query and wherein the assigning means is adapted to compute the dot product of the n-dimensional vector mapped to the user query and each stored n-dimensional vector mapped to the respective information source.

In a preferred embodiment the searching apparatus is adapted to update the set of items of each information source and to execute steps d1) to d9) each time the set of items of an information source has been updated.

The assigning means is further adapted to assign to the user query at least one information source having a matching score equal or higher than a threshold or the information source having the highest matching score.

Brief Description of the Drawings

The invention, together with its objects and the advantages thereof, may be best understood by reference to the following description taken in conjunction with the accompanying drawings in which:

Fig. 1     shows a block diagram of an exemplary query-answering communication system for delegating user queries to knowledgeable experts in an online Web community;

Fig. 2     shows schematically an ontology tree representing fields (nodes) of general knowledge and subknowledge which experts and queries can be mapped to;

Fig. 3     shows the ontology tree of Fig. 2, wherein each field of general knowledge and each field of subknowledge is defined by bag of words;

Fig. 4a)   shows a graph depicting the Precision for two parameters and as a function of the number of keywords used, if only the best matching expert to each query is considered;

Fig. 4b)   shows a graph depicting the recall for two parameters and as a function of the number of keywords, if only the best matching expert to each query is considered;

Fig. 5a)   shows a graph depicting the Precision for two parameters and as a function of the number of keywords used, if a set of experts with the top three rankings to each query is considered:

Fig. 5b)   shows a graph depicting the recall for two parameters and as a function of the number of keywords used, if a set of experts with the top three rankings to each query is considered;

Fig. 6a)   shows a graph depicting the Precision for two parameters and as a function of the number of keywords used, if a set of experts with the top six rankings to each query is considered shows a graph depicting the Precision for two parameters and as a function of the number of keywords used, if a set of experts with the top three rankings to each query is considered; and

Fig. 6b)   shows a graph depicting the recall for two parameters and as a function of the number of keywords used, if a set of experts with the top six rankings to each query is considered.

Detailed Description of the Invention

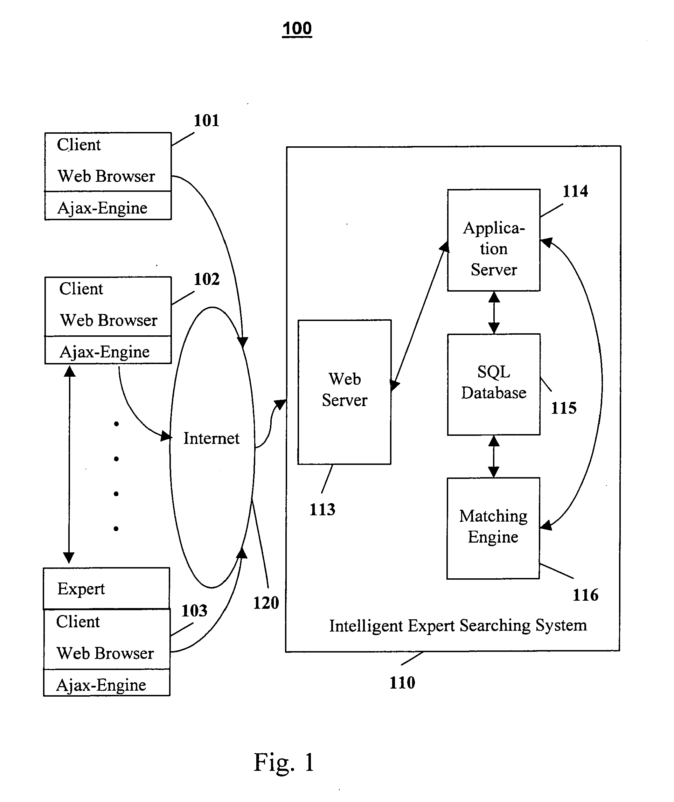

Fig. 1 shows an example of a graph-based query-answering communication system 100 for knowledge retrieving within web communities. It may use features of known search engines, blogs, chats, and peer-to-peer technologies. In order to ensure Web 2.0 compliancy and user friendliness, the graph-based query-answering communication system 100 follows, for example, three basic paradigms. Firstly, the web is considered as the platform and the user's browser as a client; secondly, the system has a flexible and extendable architecture and allows for personalized interfaces; thirdly, it incorporates pattern recognition techniques enabling intelligent retrieval.

As shown in Fig. 1, the query-answering communication system 100 comprises an intelligent expert searching system 110 which may be implemented as a single server or include a cluster of separate servers. In the embodiment as shown the intelligent expert searching system 110 includes a Web server 113 that can be accessed by multiple clients via the Internet 120. To facilitate the illustration only three user devices 101, 102 103 are shown which function as a client. In the present case, user device 103 is associated with an expert, whereas the other user devices 10 and 102 are assigned to query posers. Each client incluces, for example, a Web browser running special client-side scripts or web widgets or desktop clients. Furthermore an Ajax engine is implemented on each client which provides the necessary graphics and communication capabilities allowing us to use the web browser as a client.

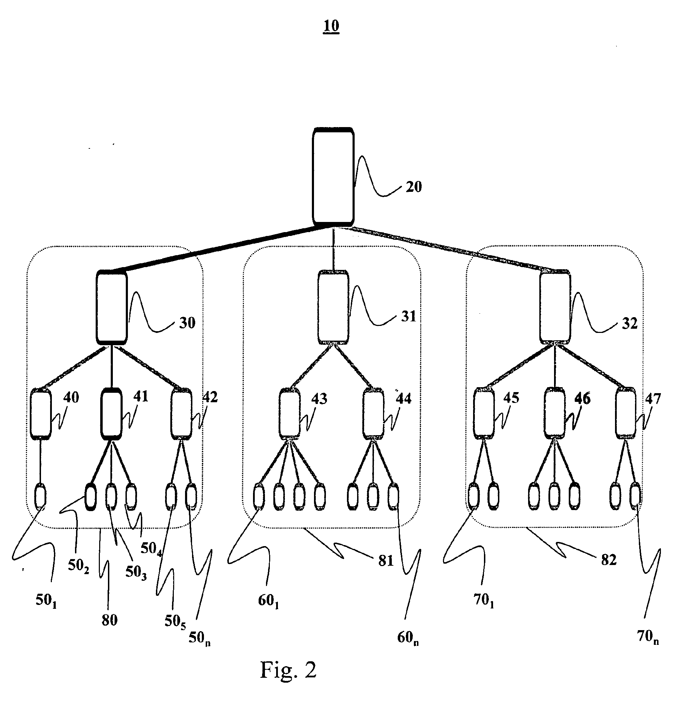

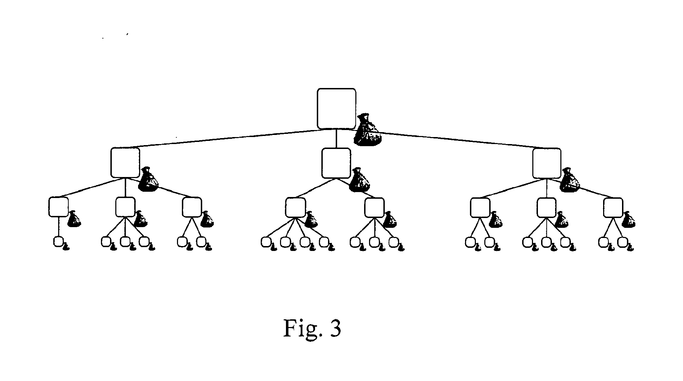

The web server 113 sustains the connection between the intelligent expert searching system 110 and the clients. The web server 113 may also have the capability of serving desktop client programs as well as widgets. The intelligent expert searching system 110 further comprises an application server 114 which provides the functionality of serving dynamic information to the clients via the web server 113 and facilitating client to client communications. In addition, it supports further basic functions such as authorization and authentication of users participating to the expert searching system 110. The application server 114 is, for example, realized using the TurboGears framework which allows for rapid application development by exploiting the Python scripting language. For example, a SQL database 115 stores all user and system related data including expert ratings and overall statistics which may help to find an expert for a specific question. In particular, a plurality of sets of words, each defining a different field of general knowledge and a different field of subknowledge may also be stored in the database or a separate memory. These fields are arranged in a graph-based hierarchical tree, hereinafter also called an ontology tree. A field of general knowledge is hereinafter also referred to as a topic, whereas a field of subknowledge is hereinafter also referred to as a subtopic. Each topic and each subtopic is associated with a respective node of the ontology tree as best seen in Figs. 2 and 3 and illustrated below. The database 115 provides all the data to the application server 114 and to a matching engine 116. The matching engine 106 has the functionality of matching queries to experts in an intelligent manner which is described below in detail.

An advantage of this system includes utilization of an already available, well-known infrastructure.

Now the operation of the query-answering communication system 100 is described in detail.

A treelike hierarchical knowledge arrangement 10, also called an ontology tree is defined as shown in Fig. 2. The ontology tree comprises in our example a root node 20, three nodes 30, 31 and 32 at a top level, each defining the top of a branch 80, 81 and 82, respectively. Each node 30, 31 and 32 is assigned to a different general knowledge field or topic. For example, the topic "physics" is associated with node 31. At an intermediate level subnodes 40 to 47 are arranged which fields of subknowledge are assigned to. Nodes 40 to 42 are directly linked to node 30 and include different subknowledge fields specifying the topic of node 30. For example, ,,theoretic physics" is assigned to subnode 41. Subnodes 43 and 44 belong to node 31 and subnodes 45 to 47 are assigned to node 32. Each of the subnodes specifically defines the respective subtopic. At the lowest level leaf nodes $50_1$ to $70_n$ are arranged. A specific subknowledge field is associated with each leaf node. It is to be understood that more than one intermediate level may be positioned between the root and the leaf nodes. In the illustrative ontology tree 10 leaf node $50_1$ is linked to subnode 40, leaf nodes $50_2$ to $50_4$ are linked to subnode 41, whereas leaf nodes $50_5$ to $50_n$ are linked to subnode 42. The remaining leaf nodes are linked to the subnodes 43 to 47 in a similar manner, as shown in Fig. 2. Each leaf node is associated with a specific subknowledge field defining the subknowledge field of a subnode which it is linked to in more detail. For example, the subknowledge field ,,electromagnetic physics" is assigned to leaf node $50_2$, the subtopic quantum mechanics to leaf node $50_3$ and the subtopic "computational physics" to leaf node $50_4$. Each field of general knowledge and each field of subknowledge is represented by a set (tag) of words. This is symbolically shown in Fig. 3. Each set (bag) of words can be obtained by processing a collection of related texts from online and encyclopaedic rescurces using well-known natural language processing methods.

In order to improve robustness computing time of the system 100 the sets of words associated with the respective nodes and subnodes may be optimized. It is assumed that the ontology tree comprises n nodes, including subnodes as well as leaf nodes.

Let us define for notational convenience $C(n)$ as the set of children nodes and $p(n)$ as the unique parent of node n. We associate each node n with a representative *bag of words* $B(n):=\{\omega_1,...,\omega_{Bn}\}$, where $w_i$ denotes the $i^{th}$ word. This set (bag) of words can be for example obtained by processing a collection of related texts from online and encyclopaedic resources using well-known natural language processing methods. Subsequently, we optimize all of the bag of words $B$ in the ontology tree 10 both vertically and horizontally in order to strengthen the hierarchical structure of the tree and to reduce redundancies, respectively. First, in the vertical direction, we find the union of bag of words of each node n and the ones of its children $\bar{B}(n) = B(n)\cup[\cup_{i\in C(n)}B(i)]$. Then, we replace $B(n)$ with $\bar{B}(n)$ for all $n\in N$. We repeat this process starting from leaf nodes until the root of the tree is reached. Next, in the horizontal direction, we find the overlapping words among all children of a node $n$, $\bar{B}(n)=\cap_{i\in C(n)}B(i)$, subtract these from each $i\in C(n)$ such that $B(i)=B(i)\backslash\bar{B}(n)$, and repeat this for all $n\in N$. As a result, the set of words of a higher level node contains the sets of words of all nodes at this level as well as the union of all set of words of its descendant nodes at the lower levels.

Now it is assumed that the users of the devices 101, 102 and 103 have been registered at the application server 114 after authentication and authorization. Furthermore, the user of the device 103 and other users, not shown, have identified themselves as experts on certain topics. Once registered, they can either address the community with problems they need assistance with, or can respond to other users' questions. Rather than mediating the communication between community members by an forum-style mechanism, the query-answering system 100 automatically analyzes user queries and proposes appropriate experts who then can be contacted directly via, for example, instant messaging. For each expert a set of words of flexible or fixed size is stored for example in the database 115 which defines his/her profile or expertise.

In order to map the expert profiles onto the different branches 80, 81 and/or 82 of the ontology tree 10, i. e. to pre-group the experts into the specific general knowledge and subknowledge fields, a similarity measure algorithm is used by the matching engine 116 which determines the similarity between the set of words of each expert and the set of words of each general knowledge field and subknowledge field.

To reduce the computing time and the memory size required the ontology tree 10 can easily be serialized by, for example, ordering its nodes from top to bottom and left to right. Hence, we obtain an associated vector representation of the tree 10. An important aspect of the algorithm is the representation of the experts and queries as branches of the ontology tree 10 and equivalently as n-dimensional linear vectors on the so called *ontology-space.* The n-dimensional vector $v(n_1...n_n)$ may have the structure of $v(30,...70_n)$, wherein the numbers represent the respective nodes, subnodes, and leaf nodes of the ontology tree 10. The order of the vector elements each representing a node, subnode or leaf node is predetermined. For example the nodes may grouped branch wise such that, for example, node 30 is the first vector element and followed by subnodes 40, 41, 42 and leaf nodes $50_1$ to $50_n$. In the same manner follow the nodes of branch 81 and 82. Therefore, queries as well as experts can equivalently be represented by vectors in this linear vector space. Now, the operation of the matching engine 116 is described to pre-group tha experts to at least one branch by generating an n-dimensional linear vector for each expert. This is done by using a similarity measure algorithm as explained below.

As mentioned above, each field of knowledge and subknowledge is described by a set of words. Similarly, each query and expert is associated with a bag of words. Therefore, the similarity measure algorithm executed by the matching engine 116 is defined to compare two such bags of words. An exemplary similarity measure $r(i,j)$ between a set of words B(i) of a query or an expert and a set of words of a field of general knowledge or subknowledge B(j) is defined by:

$$r(i,j) := \frac{|B(i)\cap B(j)|}{\sqrt{|\bar{B}(i)|}\sqrt{|\bar{B}(j)|}}, \tag{1}$$

wherein B(i):= $\{w_1...w_i\}$ and B(j):=$\{w_1...w_j\}$.

Firstly, the set of words of the first expert and the ontology tree structure is input from the database 115 to the matching engine 116. Then, the following steps of the similarity measure algorithm are executed:

1. Computing the similarity between the set of words of the first expert and each set of words associated with the nodes 30, 31 and 32 which are arranged at the top level, directly below the root node 20 by using, for example, equation (1).

2. Determining the node with the highest similarity, thereby defining the branch of the ontology tree 10 which the first expert belongs to. Alternatively, the nodes with a similarity value equal or higher than a threshold are selected.

3. Selecting the determined node, let say node 30, to form the branch and setting the vector element, assigned to that node to 1.

4. Selecting all child nodes of the determined node, which are the subnodes 40, 41 and 42, if node 30 has been determined in step 3 and computing the similarity between the set of words of the first expert and each set of words associated with the child nodes 40, 41 and 42 which are arranged at the intermediate level by using, for example, equation (1).

5. Determining a threshold, for example by computing the mean value $\mu$ and the standard variation $\sigma$ of the resulting similarity values.

6. Selecting all child nodes the similarity value of which equals or is higher than the threshold, wherein the threshold can be given by $\mu + \sigma\alpha$, where $\alpha$ is a fixed parameter greater or equal 0.

7. Setting the vector elements, assigned to the selected child nodes, lets say subnode 40 and 41, to 1.

8. Selecting all leaf nodes of the determined subnodes, which are the leaf nodes $50_1$, and $50_2$ to $50_4$, if subnodes 40 and 41 have been determined and computing the similarity between the set of words of the first expert and each set of words associated with the leaf nodes which are arranged at the lowest level by using, for example, equation (1).

9. Selecting all leaf nodes the similarity value of which equals or is higher than the threshold, wherein the threshold can be given by $\mu + \sigma\alpha$, where $\alpha$ is a fixed parameter greater or equal 0.

10. Setting the vector elements, assigned to the selected leaf nodes, lets say leaf nodes $50_1$ and $50_2$ to 1.

11. Repeating steps 1 to 10 for each expert.

12. Storing the n-dimensional vector gained for each expert for example in the database 115. It should be noted that each vector element takes the value 1 or 0, wherein the value 1 indicates a certain similarity between two set of words compared, and wherein the value 0 indicates lack of a similarity between two set of words.

It should be noted that steps 4 to 7 are repeated until the lowest level is reached.

There are two important advantages of this approach:

1. The ontology linear vector space has a much smaller dimension than the commonly used term-by-document spaces. It also avoids the need for maintaining large, inefficient, and static dictionaries.

2. Each dimension of the ontology vector space, which actually corresponds to a node, subnode and leaf node, has inherent semantic relations with other nodes. One such relation is hierarchical and immediately follows from the tree structure of the ontology. However, it is also possible to define other graph theoretic relations, for example, by defining overlay graphs.

The following example scenario is now considered. The user of device 101 enters a query on electromagnetism, i. e. a subtopic represented by leaf node 52 which is, in a wider sense, a query on theoretical physics which, in turn, is a query in the area of physics associated with node 31. Therefore, even if there is no expert on electromagnetism found an expert on quantum mechanics and computational physics might be able to help the user as these are subbranches of theoretical physics.

The user's query is transmitted via the Internet 120 to the web server 113 which forward the query to the application server 114. The application server 114 may be acapted to convert the query to a bag of words. Now, the matching engine 116 starts searching at least one expert with respect to the user's query.

At first, the following steps are executed by the matching engine 116 to map the query to the ontology tree 10 and thus to an n-dimensional linear vector:

1. Computing the similarity between the set of words of query and each set of words associated with the nodes 30, 31 and 32 which are arranged at the top level, directly below the root node 20 by using, for example, equation (1).

2. Determining the node with the highest similarity, thereby defining the branch of the ontology tree 10 which the first expert belongs to. Alternatively, the nodes with a similarity value equal or higher than a threshold are selected.

3. Selecting the determined node, let say node 30, to form the branch and setting the vector element, assigned to that node to 1.

4. Selecting all child nodes of the determined rode, which are the subnodes 40, 41 and 42, if node 30 has been determined in step 3 and computing the similarity between the set of words of the first expert and each set of words associated with the child nodes 40, 41 and 42 which are arranged at the intermediate level by using, for example, equation (3).

5. Determining a threshold, for example by computing the mean value $\mu$ and the standard variation $\sigma$ of the resulting similarity values.

6. Selecting all child nodes the similarity value of which equals or is higher than the threshold, wherein the threshold can be given by $\mu + \sigma\alpha$, where $\alpha$ is a fixed parameter greater or equal 0,

7. Setting the vector elements, assigned to the selected child nodes, lets say subnode 40 and 41, to 1.

8. Selecting all leaf nodes of the determined subnodes, which are the leaf nodes $50_1$, and $50_2$ to $50_4$, if subnodes 40 and 41 have been determined and computing the similarity between the set of words of the first expert and each set of words associated with the leaf nodes which are arranged at the lowest level by using, for example, equation (1).

9. Selecting all leaf nodes the similarity value of which equals or is higher than the threshold, wherein the threshold can be given by $\mu + \sigma\alpha$, where $\alpha$ is a fixed parameter greater or equal 0.

10. Setting the vector elements, assigned to the selected leaf nodes, lets say leaf nodes $50_1$ and $50_2$ to 1.

11. Storing the n-dimensional vector gained for the query for example in the database 115. It should be noted that each vector element takes the value 1 or 0, wherein a value 1 indicates a certain similarity between two set of words compared, and wherein the value 0 indicates lack of a similarity between two set of words.

It should be noted that, if more than one intermediate level exists, steps 4 to 7 are repeated until the lowest level is reached.

To find the best set of experts or the best expert to a given query a matching score $m(q, e_i)$ is evaluated between a query and each expert as the dot product of their n-dimensional vectors $v(q)$ and $v(e_i)$. The dot product between the vector of the query and the vector of the ith expert is defined by

$$m(q, \; e_i) := v(q) * v(e_i).$$

Subsequently, for example, the expert with the highest matching score is assigned to the query. It is assumed that the expert of the device 103 has been selected.

Thereafter, the application server 114 sends a request for answer to the web server 113 which, in turn, forwards the request to the user device 103 via the Internet 120. If the expert agrees to the request the client of the user device 103 sends a respective confirmation to the application server 114. The expert searching system 110, e. g. the application server 114 is adapted to initiate the establishment of an Internet connection between the question poser's device 101 and device 103 of the selected expert in response to the confirmation. As a result a real-time life chat communication is set up between the question poser and the selected expert.

### Experiments

We conduct a set of preliminary offline experiments to numerically study the performance of the query-answering system 100. We present next the experiment setup followed by the numerical results and their interpretation.

### Experiment Setup

We begin the experimental setup by selecting an ontology tree and associate each of its nodes with a bag of words. We choose rather arbitrarily a node subset of an ontology prepared by the Higher Education Statistics Agency (HESA), an educational institution in the United Kingdom. The bag of words for each node is obtained via the following procedure:

1. The node's name is used in finding top ranked documents through *Yahoo!* search web services.
2. The obtained HTML documents are converted to text (ASCII) format and concatenated into a single document.
3. This resulting document is further processed using the Natural Language Toolkit (NLTK) by (a) tokenizing, (b) stop word removal, and (c) stemming with Porter's stemmer, which finally yields the bag of words.

We next randomly generate experts for the purpose of offline experiments. We consider three types of experts: one knowledgeable in a single specific topic represented by a subtree or branch of the ontology tree ending at a single leaf node, one with two specific topics represented by two branches, and one with three topics. Each randomly generated pool of experts contains equal number of each type.

One can devise a variety of methods for random query generation. However, the procedure for generating queries with a known answer (an ordering of best matching experts) is more involved. We overcome this difficulty by generating a separate "query" bag of words for each node of the ontology following the steps above. We ensure that these bags of words are obtained from documents completely disjoint from the ones used to obtain node-associated bag of words. Thus, we generate queries by randomly choosing a node from the ontology and a certain number of keywords from its "query" bag of words. Since we know which node the query belongs to, we easily find a ,,ground truth" subtree or vector associated with the query which in turn allows computing the "best" ordering of experts for peering. This yields a basis for comparison with the result obtained from the generated query.

Finally, we use the similarity measure and mapping algorithm described to compute the expert peering, i.e. the set of experts R(q) with highest matching scores given a query q. Then, as described above the "ground truth" vectors are used to calculate the set of "correct" experts A(q). The recall and precision measures are calculated as the average of N=1000 such queries in these experiments by:

$$recall = \frac{1}{N}\sum_{i=1}^{N}\frac{|A(q_i)\cap R(q_i)|}{|A(q_i)|}, \quad precision = \frac{1}{N}\sum_{i=1}^{N}\frac{|A(q_i)\cap R(q_i)|}{|R(q_i)|}.$$

## Numerical Results

We next present and discuss the numerical results. In the experiments we choose the following specific parameter values: the number of query keywords (out of respective "query" bag of words) {20, 40, 60, 80, 100} , the number of experts {50, 100), and the parameter $\alpha$ of the similarity measure algorithm {0.0, 1.0}.

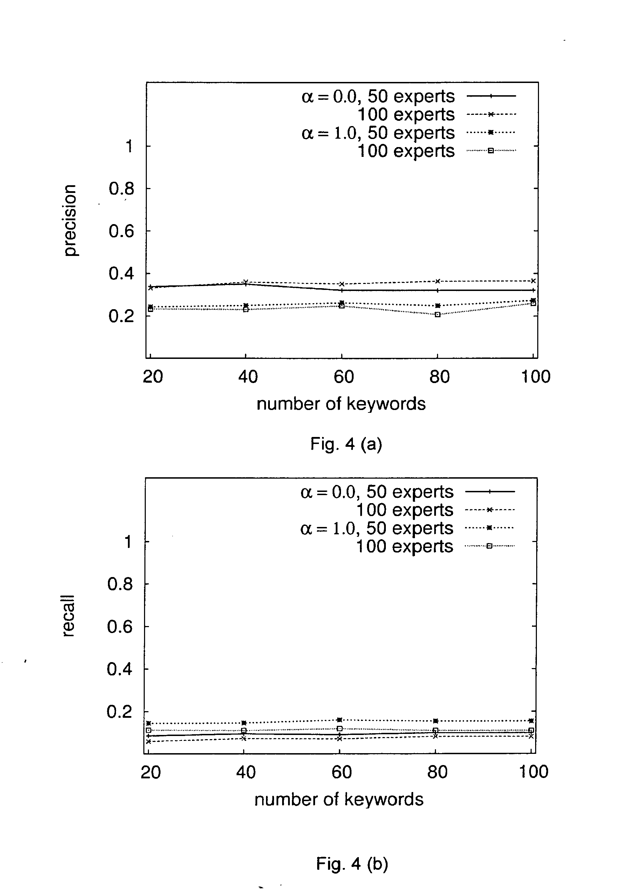

We first limit the cardinality of A to one, i.e. there is only a single expert in the "correct" peering set. The precision and recall versus the range of parameters in this case is shown in Figs. 4(a) and (b), respectively. Aiming to find only the single best matching expert is clearly over restrictive and leads to poor results. In fact, given the uncertainties within the underlying representation mechanisms it is neither very meaningful to expect such degree of accuracy nor required for the application areas considered.

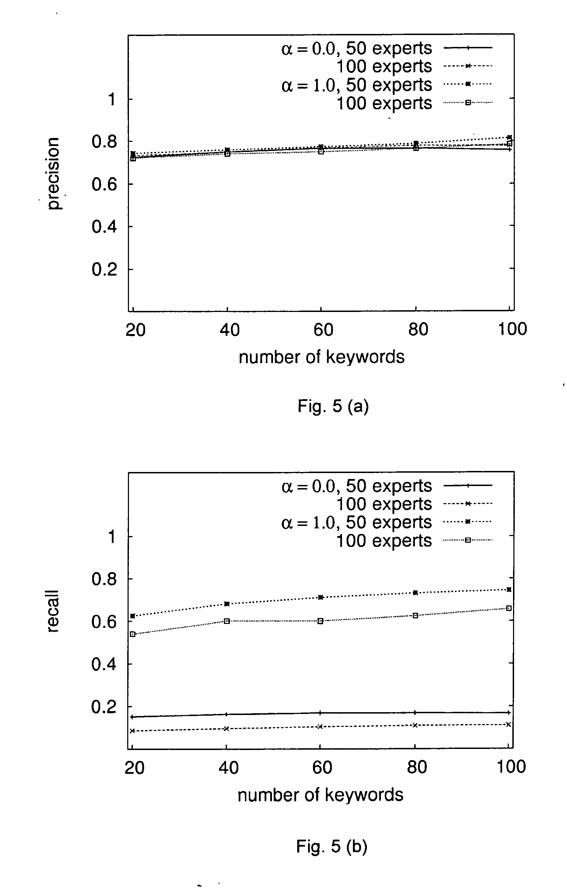

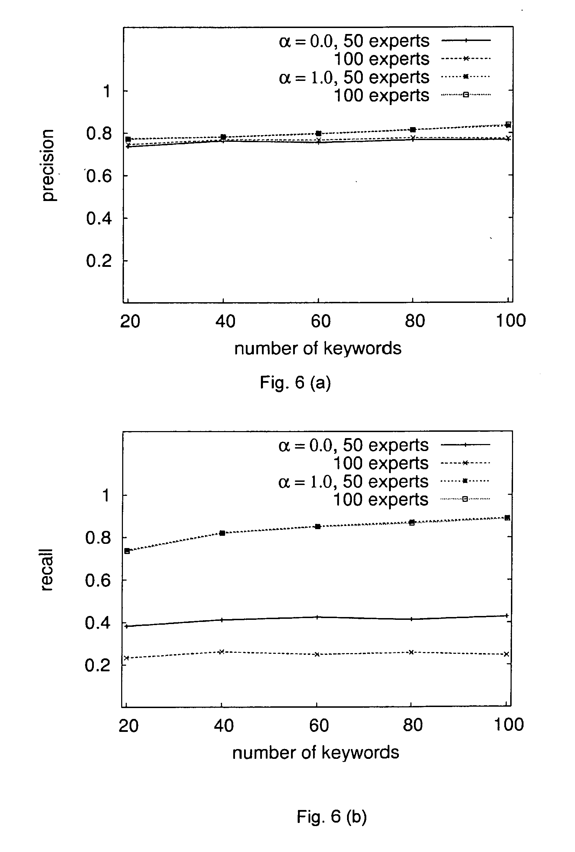

Next, the best matching experts are defined as the ones with the top three highest ranking scores. Notice that this set may contain more than three experts in some cases. The precision and recall improve drastically for all parameter choices as observed in Figs. 5(a) and (b), respectively. This result demonstrates the robustness of our expert peering scheme: its performance improves gradually when accuracy restrictions are eased. This is further illustrated by Figs. 6 (a) and (b), where the performance further increases when the set of best matching experts is defined by the ones belonging to the top six ranks. It is important to note that for each case the set of "correct" experts obtained from the "ground truth" vectors is defined as the set of experts with the single highest ranking value.

Our observations on and interpretations of results with respect to the values of other parameters include:

1. Choosing the larger $\alpha=1$ value for the similarity measure algorithm leads to improved results. Since this parameter affects the branching threshold value when mapping queries to a branch of the ontology tree we conclude that increasing it restricts unnecessary branching, and hence noise.

2. The precision remains high regardless of the number of experts and $\alpha$ in Figures 5 a) and b) and 6 a) and b). We attribute this result to hierarchical structure and robustness of our system.

3. With the correct set of parameters we observe in Fig. 5 and especially Fig. 6 that both the precision and recall are relatively insensitive to the number of experts which indicates scalability.

4. Although the precision and recall slightly increase with increasing number of words in the queries these curves are rather flat demonstrating that our system performs well in peering the experts even when given limited information.

A query-answering system 100 and an ontology-based method for automatically peering knowledge seekers with knowledgeable experts has been described. It realizes an intelligent, real-time expert searching engine for web clients that can effortlessly be deployed in enterprise Intranets or general interest online communities. A graph-based representation scheme has been proposed that comprises an ontology tree where each node corresponds to a topic or subtopic and is associated with a bag of words. This allows to represent the fields of expertise of the participating experts as well as incoming queries as subtrees of the ontology tree. Subsequently, we have addressed the resulting graph matching problem of assigning queries to relevant experts on a vector space, which follows from a serialization of the ontology tree, using simple dot products of respective vectors.

**Claims**

1. A method for automatically searching an information source in a graph-based query-answering communication system which a plurality of information sources is assigned to, the method comprising the steps of:

    a) generating and storing for each information source a set of items;
    b) defining a treelike hierarchical knowledge arrangement having an upper level and at least one lower level, wherein a plurality of general knowledge fields is arranged at the upper level and wherein each general knowledge field is assigned to at least one subknowledge field which is arranged at the lower level;
    c) generating and storing for each general <nowledge field and each subknowledge field a set of items;
    d) assigning each information source to at least one of the general knowledge fields and at least one of the subknowledge fields by performing a similarity measure algorithm on the basis of the stored sets of items of each information source, each general knowledge field and each subknowledge field;
    e) entering a query by a user;
    f) deriving from the user query a set of items;
    g) assigning the query to at least one of the general knowledge fields and at least one of the subknowledge fields by performing the similarity measure algorithm on the basis of the stored sets of items of the user query, each general knowledge field and each subknowledge field;
    h) comparing, for each information source, the at least one general knowledge field and the at least one subknowledge field assigned to the user query with the at least one general knowledge field and the at least one subknowledge field assigned to the respective information source and calculating a matching score for each information source; and
    i) assigning to the user query at least one information source in dependence of its matching score.

2. The method of claim 1, wherein
   the information sources are experts and
   step a) comprises the step of deriving a set of items by processing at least one document which is associated with the respective expert to define its respective expertise.

3. The method of claim 2, wherein after executing step i) a request to answer the user query is transmitted to the at least one selected expert and wherein the user which has entered the query is connected to the expert who has agreed to the request, thereby forming a real-time life communication.

4. The method of any one of the preceding claims,
   wherein the items are words.

5. The method of any one of the preceding claims, wherein the treelike hierarchical arrangement is represented by an n-dimensional vector, wherein n equals to the number of general knowledge fields and subknowledge fields and wherein each element of the vector is set to one or zero by executing step d) which comprises the following steps:

    d1) computing the similarity between the set of items of a first information source of the plurality of information sources and the set of items of each general knowledge fields;
    d2) determining at least one general knowledge field having at least a predetermined similarity value;
    d3) setting the respective vector element which belongs to the determined general knowledge field to one;
    d4) selecting all subknowledge fields which are directly associated with the determined general knowledge field;

d5) computing the similarity value between the set of items of a first information source of the plurality of information sources and the set of items of each subknowledge fields;

d6) determining at least one subknowledge field having a similarity value equal or higher than a threshold;

d7) setting the respective vector element which belongs to the determined subknowledge field to one;

d8) selecting, if available, all subknowledge fields arranged at the next lower level of the hierarchical arrangement which are associated with the determined subknowledge field;

d9) repeating steps d5) to d8) until the subknowledge fields at the lowest level have been processed;

d10) repeating steps d1) to d9) for each information source; and

wherein the n-dimensional vector of each information source is stored.

6. The method of claim 5, wherein
step g) comprises the steps of d1) to d9) by replacing the set of items of the first information source by the set of items of the user query and wherein step i) comprises the step of computing the dot product of the n-dimensional vector mapped to the user query and each stored n-dimensional vector mapped to the respective information source.

7. The method of claim 5 or 6, wherein
the threshold at step d6) is defined by the term of $\mu + \alpha\sigma$, wherein $\mu$ is the mean value, $\sigma$ is the standard deviation of the similarity values computed at step d5) and $\alpha$ is a fixed parameter greater or equal zero.

8. The method of any one of the preceding claims, wherein the similarity between two sets of items is computed using a similarity measure.

9. The method of claim 8, wherein the similarity measure is based on a term-frequency inverse-document-frequency (TF-IDF) weight or based on the definition

$$r(i,j) := \frac{|B(i) \cap B(j)|}{\sqrt{|B(i)|}\sqrt{|B(j)|}},$$

wherein B(i):= $\{w_1...W_i\}$ and B(j):=$\{W_1...W_j\}$ and
wherein B(i) represents the set of items of an information source or the set of items of a user query and B(j) represents the set of items of a general knowledge field or a subknowledge field.

10. The method of any one of the preceding claims, wherein each general knowledge field and the subknowledge field associated therewith define a branch within the hierarchical arrangement and wherein the set of items of a general knowledge field contains the set of items of all subknowledge fields associated therewith and
wherein the set of items of each subknowledge field of a lower level contains the set of items of all subknowledge fields of the next lower level which are assigned to the respective subknowledge field, wherein the sets of items of subknowledge fields of the same level associated with the same branch do not comprise overlapping items and wherein the sets of items of the general knowledge fields do not comprise overlapping items.

11. The method of claim 10, wherein
all sets of items of the general knowledge fields and the subknowledge fields are stored in a root node of the hierarchical arrangement.

12. The method of claim 5, wherein
the set of items of each information source is updated and wherein steps d1) to d9) are executed each time the set of items of an information source has been updated.

13. A question-answering communication system (100) for automatically searching an information source comprising

- an information source searching apparatus (110);
- a plurality of client devices (101 to 103) which are adapted to be connected to each other and/or to the information source searching apparatus (110) via communication means (120), wherein at least one of the client devices (103) is associated with an information source, at least some of the client devices being adapted to transmit a user query to the information source searching apparatus (110), wherein

the searching apparatus (110) comprises:

first storage means (115) for storing for each information source a set of items;
second storage means (115) for storing a treelike hierarchical knowledge arrangement having an upper level and at least one lower level, wherein a plurality of predetermined general knowledge fields is arranged at the upper level and wherein each general knowledge field is assigned to at least one first subknowledge field which is arranged at the lower level;
third storing means (115) for storing for each general knowledge field and each subknowledge field a set of items;
matching means (116) for assigning each information source to at least one of the general knowledge fields and at least one of the subknowledge fields by performing a similarity measure algorithm on the basis of the stored sets of items of each source, each general knowledge field and each subknowledge field; deriving means for deriving a set of items from a query entered by a user;
said matching means (116) adapted to assign the query to at least one of the general knowledge fields and at least one of the subknowledge fields by performing the similarity measure algorithm on the basis of the stored sets of items of the user query, each general knowledge field and each subknowledge field,
means for comparing, for each information source, the at least one general knowledge field and the at least one subknowledge field assigned to the user query with the at least one general knowledge field and the at least one subknowledge field assigned to the respective information source,
means for calculating a matching score for each information source; and
assigning means adapted to assign to the user query at least one information source in dependence of the matching score.

14. The question-answering communication system of claim 13, wherein
the communication means comprises an IP-based network (120), in particular an Intranet or the Internet and wherein the searching apparatus (110) comprises at least one Web server (113) adapted to communicate with the client devices (101 to 103).

15. The question-answering communication system method of claim 12 or 13, wherein
the information sources are experts and
the searching apparatus (110) comprises means for deriving a set of items by processing at least one document which is associated with the respective expert to define its respective expertise.

16. The question-answering communication system of claim 14, wherein the searching apparatus (110) is adapted to transmit a request to answer the user query to the client device (101) of the at least one selected expert and to connect the user who has entered the query to the expert who has agreed to the request, thereby forming a real-time life chat over the communication means.

17. The question-answering communication system of any one of the preceding claims,
wherein the items are words.

18. The question-answering communication system of any one of the preceding claims, wherein the treelike hierarchical arrangement is represented by an n-dimensional vector, wherein n equals to the number of general knowledge fields and subknowledge fields and
wherein the matching means is adapted to:

d1) compute the similarity between the set of items of a first information source of the plurality of information sources and the set of items of each general knowledge fields;
d2) determine at least one general knowledge field having at least a predetermined similarity value;
d3) set the respective vector element which belongs to the determined general knowledge field to one;
d4) select all subknowledge fields which are directly associated with the determined general knowledge field;
d5) compute the similarity value between the set of items of a first information source of the plurality of information sources and the set of items of each subknowledge fields;
d6) determine at least one subknowledge field having a similarity value equal or higher than a threshold;
d7) set the respective vector element which belongs to the determined subknowledge field to one;
d8) select, if available, all subknowledge fields arranged at the next lower level of the hierarchical arrangement which are associated with the determined subknowledge field;

d9) repeat steps d5) to d8) until the subknowledge fields at the lowest level have been processed;

d10) repeat steps d1) to d9) for each information source;

wherein fourth storing means are provided for storing the n-dimensional vector of each information source.

19. The question-answering communication system of claim 18, wherein
the matching means is further adapted to execute the steps of d1) to d9) by replacing the set of items of the first information source by the set of items of the user query and wherein the assigning means is adapted to compute the dot product of the n-dimensional vector mapped to the user query and each stored n-dimensional vector mapped to the respective information source.

20. The question-answering communication system of claim 12, wherein
the searching apparatus (110) is adapted to update the set of items of each information source and to execute steps d1) to d9) each time the set of items of an information source has been updated.

21. The question-answering communication system of any one of the claims 13 to 20, wherein the assigning means is adapted to assign to the user query at least one information source having a matching score equal or higher than a threshold or the information source having the highest matching score.

22. A computer readable medium storing a set of programming instructions for executing the method according to any one of the claims 1 to 12.

**100**

Fig. 1

<u>10</u>

Fig. 2

Fig. 3

Fig. 4 (a)

Fig. 4 (b)

Fig. 5 (a)

Fig. 5 (b)

Fig. 6 (a)

Fig. 6 (b)

**European Patent Office**

**EUROPEAN SEARCH REPORT**

Application Number

EP 07 01 1296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YUKAWA T ET AL: "An expert recommendation system using concept-based relevance discernment" PROCEEDINGS OF THE 13TH IEEE INTERNATIONAL CONFERENCE ON TOOLS WITH ARTIFICIAL INTELLIGENCE. ICTAI 2001. DALLAS, TX, NOV. 7-9, 2001, IEEE INTERNATIONAL CONFERENCE ON TOOLS WITH ARTIFICIAL INTELLIGENCE, LOS ALAMITOS, CA : IEEE COMP. SOC, US, vol. CONF. 13, 7 November 2001 (2001-11-07), pages 242-249, XP010570513 ISBN: 0-7695-1417-0 * the whole document * | 1-22 | INV. G06F17/30 |
| Y | BILL B WANG ET AL: "Learning text classifier using the domain concept hierarchy" COMMUNICATIONS, CIRCUITS AND SYSTEMS AND WEST SINO EXPOSITIONS, IEEE 2002 INTERNATIONAL CONFERENCE ON JUNE 29 - JULY 1, 2002, PISCATAWAY, NJ, USA,IEEE, vol. 2, 29 June 2002 (2002-06-29), pages 1230-1234, XP010631747 ISBN: 0-7803-7547-5 * the whole document * | 1-22 | |
| A | XIAODAN SONG ET AL: "ExpertiseNet: Relational and Evolutionary Expert Modeling" USER MODELING 2005 LECTURE NOTES IN COMPUTER SCIENCE;LECTURE NOTES IN ARTIFICIAL INTELLIGENCE;LNCS, SPRINGER-VERLAG, BE, vol. 3538, 2005, pages 99-108, XP019013170 ISBN: 3-540-27885-0 * the whole document *  -/-- | | TECHNICAL FIELDS SEARCHED (IPC)  G06F |

The present search report has been drawn up for all claims

| Place of search | Date of completion of the search | Examiner |
|---|---|---|
| Munich | 7 December 2007 | Hauck, Rainer |

EPO FORM 1503 03.82 (P04C01)

**European Patent Office**

## EUROPEAN SEARCH REPORT

Application Number

EP 07 01 1296

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HEEREN F ET AL: "Xpertfinder - message analysis for the recommendation of contact persons within defined topics" 2002 IEEE AFRICON 6TH. AFRICON CONFERENCE IN AFRICA. UNIVERSITY OF PRETORIA, GEORGE, SOUTH AFRICA, OCT. 2 - 4, 2002, IEEE AFRICON CONFERENCE IN AFRICA, NEW YORK, NY : IEEE, US, vol. VOL. 1 OF 2. CONF. 6, 2 October 2002 (2002-10-02), pages 41-46, XP010621643 ISBN: 0-7803-7570-X * the whole document * | | |
| D,A | JIANGNING WU ET AL: "An Ontology-Based Method for Project and Domain Expert Matching" FUZZY SYSTEMS AND KNOWLEDGE DISCOVERY LECTURE NOTES IN COMPUTER SCIENCE;LECTURE NOTES IN ARTIFICIAL INTELLIGENCE;LNCS, SPRINGER-VERLAG, BE, vol. 3614, 2005, pages 176-185, XP019014648 ISBN: 3-540-28331-5 * the whole document * | | TECHNICAL FIELDS SEARCHED (IPC) |
| A | DAWIT YIMAM: "Expert Finding System for Organizations: Domain Analysis and the DEMOIR Approach" INTERNET CITATION, [Online] 2000, XP002239031 Retrieved from the Internet: URL:http://citeseer.nj.nec.com/yimam00expert.html> [retrieved on 2003-04-22] * the whole document * | | |

The present search report has been drawn up for all claims

| Place of search | Date of completion of the search | Examiner |
|---|---|---|
| Munich | 7 December 2007 | Hauck, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6026148 A
- US 6223165 B
- US 6829585 B
- US 6938068 B

**Non-patent literature cited in the description**

- **C. MACDONAL et al.** Voting for Candidates: Adapting Data Fusion Techniques for an Expert Search Task. *Proc. 15th ACM Conf. on Information and Knowledge, Management,* 2006, 387-396
- **K. BALOG ET AL.** Determining Expert Profiles (With an Application to Expert Finding. *Proc. 20th Int. Joint Conf. on Artificial Intelligence,* 2007, 2657-2662
- **X. LIU.** Finding Experts in Community-Based Question-Answering Services. *Proc. 14th ACM Int. Conf. on Informatuion and Knowledge Management,* 2005, 315-316
- An Ontology-Based Method for Project and Domain Expert Matching. **J. WU.** Proc. Int. Conf. on Fuzzy Systems and Knowledge Discovery. Springer, 2005, vol. 4223, 176-185